# EUROPÄISCHE PATENTSCHRIFT

(11) **EP 1 072 392 B1**
(45) Veröffentlichungstag und Bekanntmachung des Hinweises auf die Patenterteilung: **12.11.2003**
(21) Anmeldenummer: 00115851.8
(22) Anmeldetag: 24.07.2000
(51) Int. Cl.: B29C 65/20

(54) **Verfahren und Vorrichtung zum Verschweissen von auf Gehrung geschnittenen Rahmenprofilen aus Kunststoff**
Process and apparatus for welding of mitre cut plastic frame profiles
Procédé et appareil pour le soudage de profilés coupés en onglet pour la fabrication de cadres en matière plastique

(30) Priorität: 28.07.1999 DE 19935076
(43) Veröffentlichungstag der Anmeldung: 31.01.2001
(73) Patentinhaber: SCHÜCO International KG, 33609 Bielefeld (DE)
(72) Erfinder: Valentin, Manfred, 32547 Bad Oeynhausen (DE); Olschewsky, Wolfgang, 32139 Spenge (DE)
(74) Vertreter: Specht, Peter, Dipl.-Phys.

(56) Entgegenhaltungen:
- EP-A- 0 698 719
- EP-A- 0 838 324
- DE-C- 3 405 384
- DE-U- 29 710 939

## Beschreibung

Die Erfindung betrifft ein Verfahren zum Verschweißen von auf Gehrung geschnittenen Rahmenprofilen aus Kunststoff nach dem Oberbegriff des Anspruches 1 und eine Vorrichtung zur Durchführung des Verfahrens nach dem Oberbegriff des Anspruches 8. Solche Verfahren und Vorrichtungen werden hauptsächlich eingesetzt, um abgewinkelte Rahmenprofile für Türen und Fenster herzustellen.

Aus der EP 838 324 A2 ist ein Verfahren zum Verschweißen von auf Gehrung geschnittenen Rahmenprofilen aus Kunststoff mit eingezogenen Dichtungen bekannt, bei dem jeweils zwei Kunststoffprofile und zwei Dichtungen an der Gehrungsfläche miteinander verschweißt werden. Durch Formteile werden dabei die Dichtungen auch im Eckbereich weitgehend elastisch gehalten. Dieses Verfahren ist nur für Dichtungen aus schweißbarem Material einsetzbar. Es hat sich jedoch herausgestellt, daß nicht schweißfähige Dichtungen aus Gummi, Neopren und EPDM auf Dauer bessere Rückstellkräfte haben als schweißbare thermoplastische Dichtungen.

Aus diesem Grund ist im Stand der Technik ein Verfahren vorgeschlagen worden, bei dem nicht schweißbare Dichtungen in Rahmenprofile eingezogen werden und die Rahmenprofile mit den Dichtungen auf Gehrung geschnitten werden. Anschließend wird die Dichtung um den Schweißabbrand gekürzt und der in dem Rahmenprofil eingefügte Dichtungsfuß und die Profilnut werden um den Abbrand zurückgefräst. Danach werden die Rahmenprofile miteinander verschweißt, so daß die Dichtungen im Eckbereich aneinander gedrückt werden. Diese Vorgehensweise ist wegen der vielen Verfahrensschritte aufwendig und daher teuer. Ferner wird im Eckbereich der Dichtung häufig eine starke Krümmung nach außen erhalten, so daß sich eine Dichtungsspitze ausbildet. Diese nach außen hervorstehende Dichtungsspitze wird bei der Entfernung der Schweißraupen im Eckbereich leicht beschädigt, was zu Undichtigkeiten und optischen Beeinträchtigungen führen kann.

Aus der DE 3405384 C1 ist ein Verfahren und eine Vorrichtung zum Verschweißen von zwei Kunststoffprofilen zu einer Rahmenecke bekannt, bei dem die sich gegenüberliegenden Gehrungsflächen erwärmt werden, wobei in die Profile schon Dichtungen eingezogen sind. Beim Zueinanderführen der Profile sollen die Dichtungen elastisch gestaucht werden.

Es ist daher Aufgabe der vorliegenden Erfindung, ein Verfahren und eine Vorrichtung zum Verschweißen von auf Gehrung geschnittenen Rahmenprofilen aus Kunststoff zu schaffen, bei dem unter Einsatz von nicht schweißfähigen Dichtungen auf einfache Weise eine zuverlässige Abdichtung im Eckbereich des verschweißten Rahmenprofils erhalten wird.

Diese Aufgabe wird mit einem erfindungsgemäßen Verfahren dadurch gelöst, daß die Dichtungen im Bereich der Gehrungsflächen beim Zusammenfügen der Gehrungsflächen jeweils in Längsrichtung des Rahmenprofils verschoben werden. Durch das Verschieben der Dichtung wird der Effekt genutzt, daß nicht schweißfähige elastische Dichtungen problemlos um einige Millimeter in Längsrichtung gestaucht werden können, ohne daß sie ihre Rückstellkräfte und Dichtfunktion einbüßen. Durch das Verschieben der Dichtungen entfällt auch die Notwendigkeit des Zuschneidens und einer Nachbearbeitung der Dichtungen. Dies vereinfacht das Herstellungsverfahren und senkt somit die Produktions- und Investitionskosten.

Die Dichtungen werden beim Aufheizen der Gehrungsflächen schon in dem Rahmenprofil verschoben. Auf diese Weise kann beim Aufheizen der Rahmenprofile ein Schweißspiegel eingesetzt werden, an den die Rahmenprofile angedrückt werden. Die Erfindung kann somit auch bei schon bestehenden Vorrichtungen leicht nachgerüstet werden.

Zudem werden die Dichtungen in einem zusammengedrückten Zustand verschoben. Dadurch steht die Dichtung unter einer inneren Spannung und versucht sich auszudehnen. Dieser Druck durch die Dichtung wird beim Zusammenfügen der Rahmenprofile genutzt, da der durch das Aufheizen flüssig gewordene Kunststoff der Rahmenprofile nicht in den Dichtungsbereich eindringen kann, sondern durch die Dichtung weggedrückt wird. Die Dichtung schafft sich somit im Bereich der Gehrungsflächen den notwendigen Raum, damit sie im abgekühlten Zustand des Rahmenprofils eine elastisch federnde Position einnehmen kann.

Wenn die Dichtungen benachbart zu den Gehrungsflächen mehr verschoben werden als in einem Abstand von z.B. 2 bis 10 cm von der Gehrungsfläche entfernt, dann wird die Stauchung der Dichtungen gleichmäßiger auf die Länge der Dichtungen verteilt. Vorzugsweise entspricht die Stauchung etwa der Länge der Schweißzugabe von ca. 1 bis 4 mm, so daß bei einer Verteilung über eine entsprechende Länge der Dichtungen eine relative Stauchung von unter 10 % erreichbar ist.

Die Kraft zum Verschieben der Dichtungen kann einerseits durch eine senkrecht oder schräg zur Längsrichtung des Rahmenprofils verlaufende Schiebefläche oder durch Klemmkräfte erfolgen. Am effektivsten ist eine Kombination von Klemmund Druckkräften.

Die obige Aufgabe wird ferner mit einer Vorrichtung mit den Merkmalen des Anspruches 6 gelöst. Da an jeder Aufnahme ein Schieber vorgesehen ist, mit dem die Dichtung in Längsrichtung des Rahmenprofils verschoben werden kann, läßt sich die Relativbewegung zwischen Dichtung und Rahmenprofil nutzen, um beim Zusammenfügen zweier Rahmenprofile die Dichtung um die Länge der Schweißzugabe zu stauchen, und so ein schlüssiges Anliegen der zwei Dichtungen im Eckbereich ermöglicht wird.

Eine gute Führung der Dichtung beim Verschieben erhält man, da die Dichtung auf einer Bodenfläche des Schiebers aufliegt und zumindest an einer Seite an einer Seitenwand des Schiebers anliegt. Die Seitenwand verhindert, daß sich die vordere Spitze einer Dichtung nach außen hin krümmt.

Gemäß einer bevorzugten Ausführungsform der erfindungsgemäßen Vorrichtung schließt die vordere Stirnfläche des Schiebers mit der Gehrungsfläche des Rahmenprofils ab, so daß die Dichtung zumindest teilweise direkt an der Gehrungsfläche verschoben wird. Ferner können durch diese Anordnung eines Schiebers beim Zusammenfügen zwei sich gegenüber liegende Schieber mit ihren Stirnflächen aneinander gedrückt werden, so daß sie sich in der Aufnahme bewegen können.

Eine gleichmäßige Verteilung der Stauchung der Dichtung wird erreicht, wenn der Schieber mehrstufig ausgebildet ist, derart, daß eine Schiebestufe benachbart zur Gehrungsfläche einen längeren Verschiebeweg zurücklegt, als eine von der Gehrungsfläche entfernte Schiebestufe. Dies erfordert eine teleskopartige Ausbildung des Schiebers.

Die Erfindung wird nachfolgend anhand eines Ausführungsbeispiels mit Bezug auf die beigefügten Zeichnungen näher erläutert. Es zeigen:
- **Fig. 1**: einen ersten Verfahrensschritt des erfindungsgemäßen Verfahrens, bei dem Rahmenprofile aufgeheizt werden;
- **Fig. 2**: einen zweiten Verfahrensschritt am Anfang des Zusammenfügens der zwei Rahmenprofile;
- **Fig. 3**: die zusammengefügten Rahmenprofile nach Abschluß des Verfahrens;
- **Fig. 4**: eine vergrößerte Draufsicht auf zwei Rahmenprofile vor dem Zusammenfügen;
- **Fig. 5**: eine Vorderansicht auf die Gehrungsfläche des Rahmenprofils vor dessen Auflegen auf die Aufnahme der erfindungsgemäßen Vorrichtung;
- **Fig. 6**: eine Vorderansicht der erfindungsgemäßen Vorrichtung mit eingefügtem Rahmenprofil;
- **Fig. 7**: eine perspektivische Ansicht einer Aufnahme einer erfindungsgemäßen Vorrichtung;
- **Fig. 8**: eine Draufsicht auf die Aufnahme nach Figur 7 mit ausgefahrenem Schieber, und
- **Fig. 9**: eine Draufsicht auf die Aufnahme nach Figur 7 mit eingefahrenem Schieber.

Bei dem erfindungsgemäßen Verfahren wird in einem ersten Verfahrensschritt ein auf Gehrung geschnittenes Rahmenprofil 1 mit einer eingezogenen äußeren Dichtung 2, die in einer Verankerungsnut 3 in dem Rahmenprofil aufgenommen ist, und mit einer inneren Dichtung 4, die in einer inneren Verankerungsnut 5 eingezogen ist, in Kontakt mit einem Schweißspiegel 6 gebracht. Auf der anderen Seite des Schweißspiegels 6 ist ebenfalls ein auf Gehrung geschnittenes Rahmenprofil 1 vorgesehen, in dem Dichtungen 2 und 4 eingezogen sind. Die Dichtungen 2 und 4 bestehen aus einem elastischen Kunststoff, wie Neopren, EPDM, Gummi oder einem anderen Elastomer. Das Material der Dichtungen ist dabei so gewählt, daß beim Erhitzen der Dichtungen 2, 4 und der Rahmenprofile 1 auf Schweißtemperatur keine Verklebungen auftreten. Vorzugsweise sind die Dichtungen 2, 4 vollständig aus nicht schweißfähigem Material gebildet.

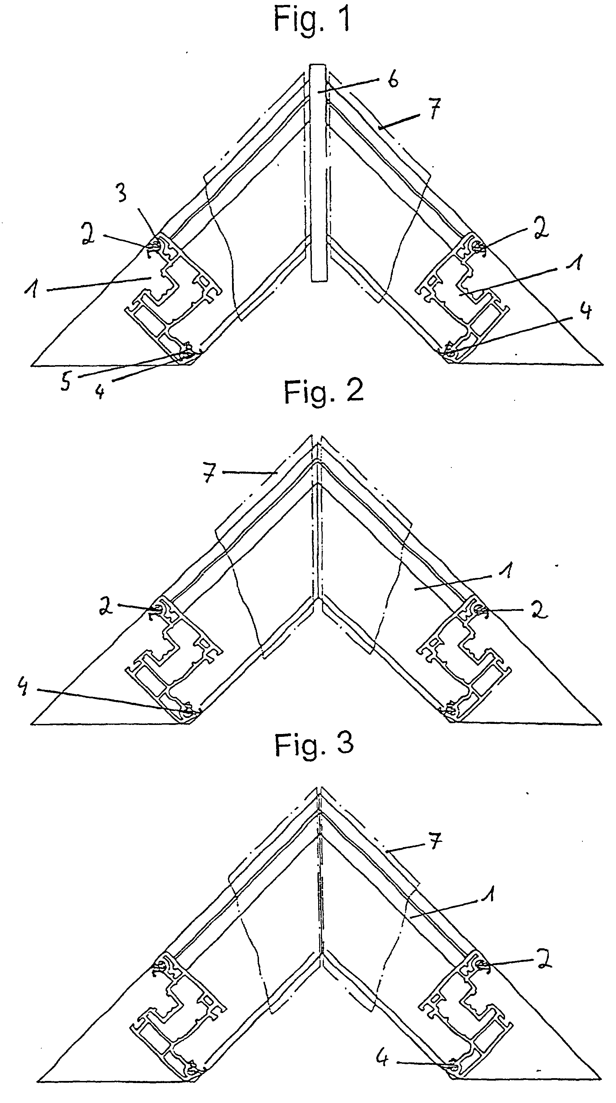

Wie in Figur 1 gezeigt ist, sind die Rahmenprofile 1 in Aufnahmen 7 gehalten und die zwei Gehrungsflächen der Rahmenprofile 1 werden an den Schweißspiegel 6 angelegt und erhitzt. Bei Überschreiten der Schmelztemperatur verflüssigt sich das Kunststoffmaterial an den Gehrungsflächen. Da die Rahmenprofile 1 für eine bessere Wärmeübertragung mit einem gewissen Druck an dem Schweißspiegel 6 anliegen, wird das Kunststoffmaterial an der Gehrungsfläche schon teilweise etwas weggedrückt. Dadurch bewegen sich die Kunststoffprofile 1 um eines kurzes Stück (0,5 bis 1,5mm) auf den Schweißspiegel 6 zu, wobei die in dem Rahmenprofil 1 gehaltene äußere Dichtung 2 um dieses Stück mittels einer weiter unten beschriebenen Einrichtung in dem Rahmenprofil 1 verschoben wird. Die innere Dichtung 4 kann auf entsprechende Weise in dem Rahmenprofil 1 verschoben werden, vorliegend wird jedoch nur auf die äußere Dichtung 2 eingegangen.

Nach dem Erhitzen der Rahmenprofile 1 an den Gehrungsflächen auf Schweißtemperatur und Entfernen des Schweißspiegels 6 wird gemäß Figur 2 mit dem Zusammenfügen der beiden Rahmenprofile 1 begonnen. Die erhitzten und deformierbaren Bereiche der Rahmenprofile 1 erstrecken sich von den Gehrungsflächen einige Millimeter in die Tiefe. Um eine stabile Schweißverbindung zwischen den beiden Rahmenprofilen 1 zu erhalten, werden diese derart gegeneinander gedrückt, daß ein Teil des erhitzten Kunststoffmaterials als Schweißzugabe seitlich weggedrückt wird. In Figur 3 ist die Endstellung der zusammengefügten Rahmenprofile 1 gezeigt, wobei zwischen den beiden Aufnahmen 7 für die Rahmenprofile 1 ein kleiner Spalt verbleibt, an dem Schweißraupen ausgebildet sind. Die Dichtungen 2 und 4 werden beim Zusammenfügen der beiden Rahmenprofile 1 relativ zu den Rahmenprofilen in Längsrichtung bewegt und derart gestaucht, daß der durch die Rahmenprofile 1 beim Zusammenfügen zurückgelegte Weg von etwa 1 bis 4 mm kompensiert wird.

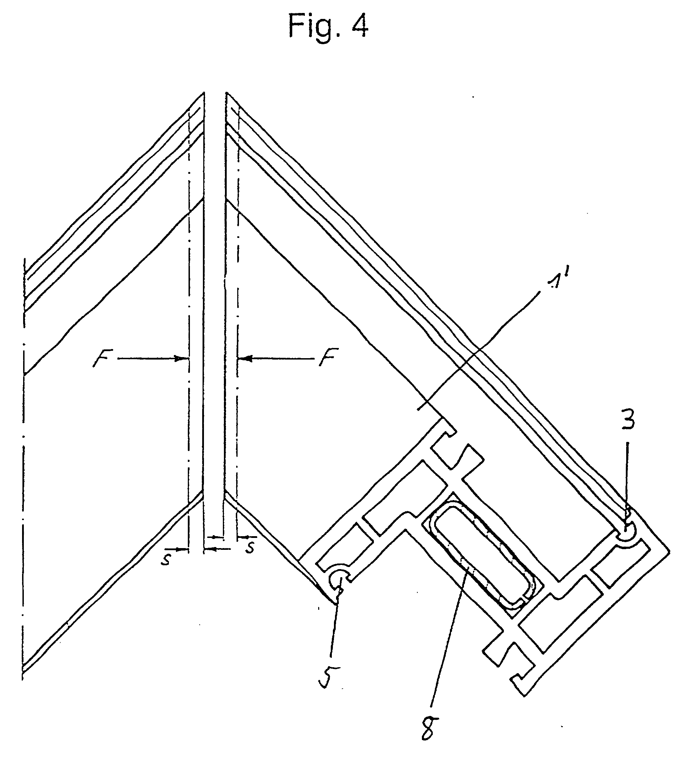

In Figur 4 ist ein leicht abgewandeltes Rahmenprofil 1' in vergrößerter Darstellung gezeigt. Das Rahmenprofil 1' besitzt eine äußere Verankerungsnut 3 und eine innere Verankerungsnut 5 für entsprechende Dichtungen und ist durch ein Verstärkungsrohr 8 besonders steif ausgebildet. Im vorderen Bereich ist das Rahmenprofil 1' auf Gehrung geschnitten. Beim Zusammenfügen zweier Rahmenprofile 1' wird das Rahmenprofil 1' um die Schweißzugabe s in der Länge verkürzt. Mit dem Pfeil F ist die Kraft beim Aufheizen des Rahmenprofils 1' durch das Andrücken an den Schweißspiegel 6 und später beim Zusammenfügen zweier Rahmenprofile 1' dargestellt.

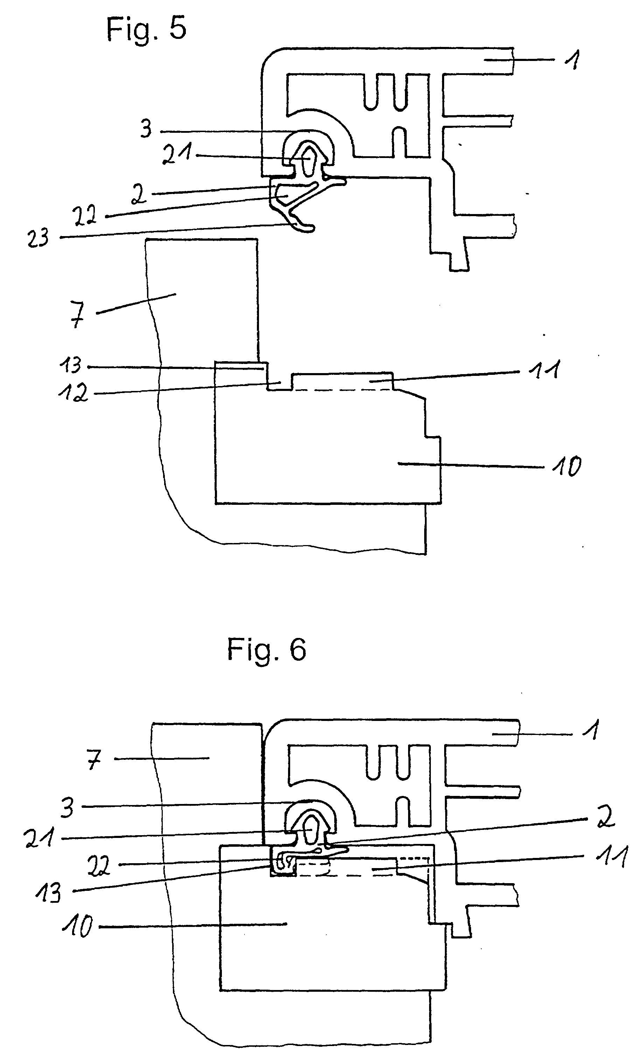

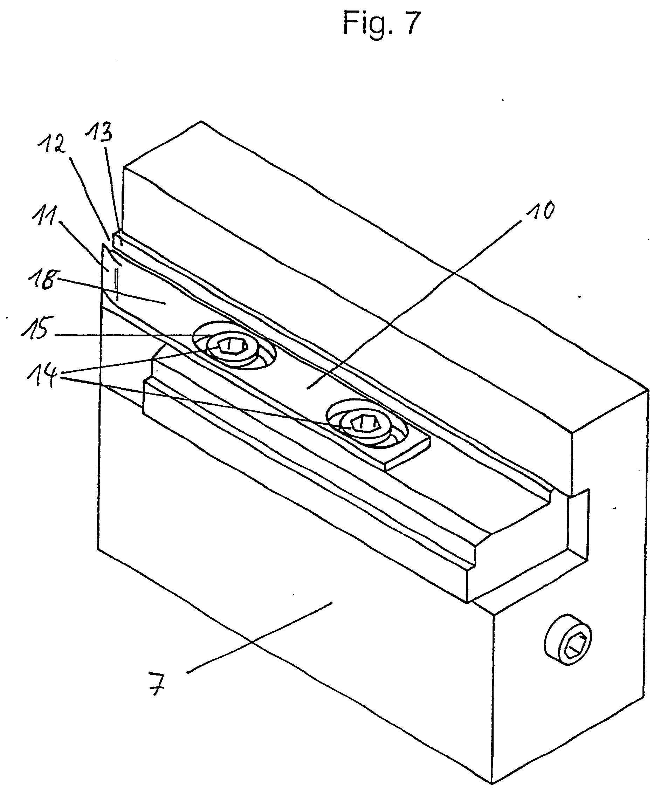

In den Figuren 5 bis 9 ist ein Teil einer erfindungsgemäßen Vorrichtung zur Durchführung des vorstehend beschriebenen Verfahrens gezeigt.

Die Vorrichtung zum Verschweißen zweier Rahmenprofile 1 weist für jedes Rahmenprofil 1 mindestens eine Aufnahme 7 auf, die mit einem beweglichen Schieber versehen ist. Der Schieber 10 besitzt eine Bodenfläche 18 und ist in der Aufnahme 7 durch Führungsprofile längsverschieblich gelagert. Im dargestellten Ausführungsbeispiel sind zur Führung des Schiebers 10 Schrauben 14 fest mit der Aufnahme 7 verbunden, so daß der Schieber 10 durch gebildete Langlöcher 15 in Längsrichtung bewegbar ist.

Im Bereich der Gehrungsfläche ist der Schieber 10 mit einer Vorderwand 11 versehen, die mit der Vorderseite des Schiebers 10 abschließt. Die Vorderwand 11 verläuft zu der Bodenfläche 18 hin schräg gewölbt nach unten. Seitlich zu der Bodenfläche 18 ist eine Seitenwand 13 vorgesehen, die im rechten Winkel zur Bodenfläche 18 angeordnet ist. Zwischen der Seitenwand 13 und der Vorderwand 11 ist eine Ausnehmung 12 vorgesehen.

Wie in Figur 5 gezeigt ist, befindet sich die Dichtung 2 vor dem Einfügen in die Aufnahme 7 im ausgebreiteten Zustand, so daß eine Dichtlippe 23 vom Rahmenprofil 1 hervorsteht. Um im Rahmenprofil 1 fest verankert zu sein, weist die Dichtung 2 einen Befestigungsfuß 21 auf, der als zusammendrückbares Hohlprofil ausgebildet ist. Der Befestigungsfuß 21 ist dabei durch zwei seitliche Schenkel in einer Verankerungsnut gehalten. Damit die Dichtung 2 die Rückstellkräfte über eine lange Zeit halten kann, ist die Dichtung mit einem Hohlraum 22 versehen, der zwischen dem Befestigungsfuß 21 und der Dichtlippe 23 ausgebildet ist.

Für das Zusammenfügen zweier Rahmenprofile 1 wird das Rahmenprofil 1 auf die Auflage 7 und den Schieber 10 gelegt, wie in Figur 6 gezeigt ist. Dabei wird der Hohlraum 22 zusammengedrückt und die Dichtlippe 23 liegt auf der Bodenfläche 18 des Schiebers 10 auf. Im vorderen Bereich ist die Dichtlippe 23 durch den schräg verlaufenden Bereich der Vorderwand 11 noch stärker zusammengedrückt. Die vorderste Spitze der Dichtung 2 ragt in die Ausnehmung 12 ein, so daß die Vorderwand 11 und die Dichtungsspitze in der Ausnehmung 12 im wesentlichen eine Fläche ausbilden. Die Dichtung 2 liegt ferner an der Seitenwand 13 des Schiebers 10, so daß ein seitliches Verbiegen der Dichtung 2 verhindert wird. In Figur 6 ist ferner mit gestrichelten Linien eine alternative Ausführungsform des Schiebers 10 mit verlängerter Vorderwand 11 dargestellt, bei der die Vorderwand 11 bis zu dem Rahmenprofil 1 herangeführt ist.

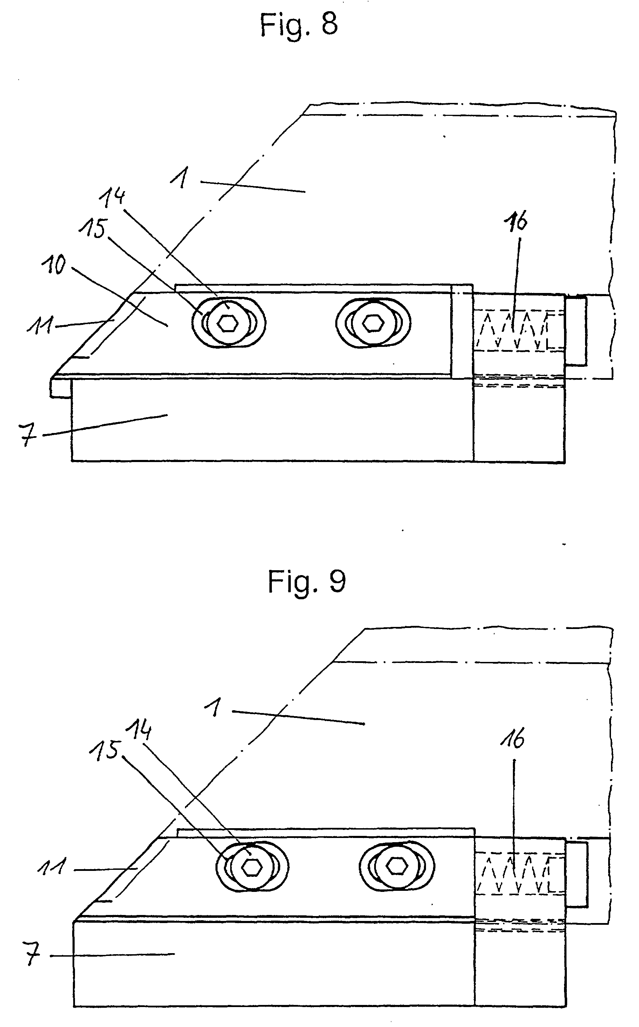

Der Schieber 10 ist in dem Halter 7 durch eine Druckfeder 16 vorgespannt. Bei Überwindung der Federkraft wird der Schieber 10 nach hinten in die in Figur 9 gezeigte Endposition gedrückt.

Zum Verbinden zweier Rahmenprofile 1 wird in die Aufnahme 7 ein Rahmenprofil 1 gelegt, so daß die Gehrungsfläche des Rahmenprofils 1 mit der Vorderseite des Schiebers 10 abschließt. Anschließend wird zwischen zwei jeweils in einer Halterung 7 aufgenommener Rahmenprofile 1 ein Schweißspiegel 6 eingebracht, der die Gehrungsfläche jedes Rahmenprofils 1 erhitzt. Durch die Verflüssigung des Kunststoffmaterials wird das Rahmenprofil 1 beim Erhitzen schon teilweise in Richtung des Schweißspiegels 6 verschoben. Die Dichtung 2 schmilzt jedoch nicht und wird um die Wegstrecke in dem Rahmenprofil 1 verschoben, um die das Rahmenprofil 1 zu dem Schweißspiegel 6 bewegt wird.

Zum Zusammenfügen der beiden Rahmenprofile 1 wird der Schweißspiegel 6 entfernt und die beiden Rahmenprofile 1 aneinandergedrückt. Dabei werden die Rahmenprofile 1 um die Schweißzugabe verkürzt. Beim Zusammenfügen liegen die beiden Vorderseiten der Schieber 10 aneinander an, so daß die Schieber 10 ortsfest bleiben, während die Aufnahme 7 mit den Rahmenprofilen 1 aufeinander zubewegt werden. Dadurch wird eine Relativbewegung zwischen der Dichtung 2 und dem Rahmenprofil 1 erzeugt. Durch das Zusammendrücken der Dichtung 2 wird dabei gewährleistet, daß das flüssig gewordene Kunststoffmaterial nicht in den Dichtungsbereich einfließt, sondern weg von der Dichtung 2 gedrückt wird.

In dem dargestellten Ausführungsbeispiel wird die Stauchung der Dichtung 2 im wesentlichen auf die Länge des Schiebers 10 verteilt, wobei durch die Vorderwand 11 gewährleistet ist, daß der vordere Bereich der Dichtung 2 mit der Gehrungsfläche abschließt.

Alternativ zu dem dargestellten Ausführungsbeispiel kann der Schieber 10 eine Haftoberfläche besitzen, um die Dichtung 2 durch Reibungskräfte an der Haftoberfläche relativ in dem Rahmenprofil 1 zu verschieben. Ferner kann der Schieber 10 teleskopartig ausgebildet sein, wobei der Verschiebeweg im Bereich der Gehrungsfläche größer ist als in einem von der Gehrungsfläche entfernt liegenden Bereich. Statt der dargestellten Dichtung können auch andere Dichtungen mit zwei oder mehr Dichtlippen vorgesehen werden. Die erfindungsgemäße Aufnahme wurde nur für die äußere Dichtung 2 näher beschrieben, kann jedoch auch für die innere Dichtung 4 eingesetzt werden.

## Patentansprüche

1. Verfahren zum Verschweißen von auf Gehrung geschnittenen Rahmenprofilen (1) aus Kunststoff mit eingezogenen, über die gesamte Profillänge sich erstreckenden, aus einem Befestigungsfuß (21) und mindestens einer Dichtlippe (23) bestehenden Dichtungen aus elastischem Material, dessen Schmelzpunkt höher liegt als der des Materials des Rahmenprofils (1), bei dem die Gehrungsflächen und die benachbarten Rahmenprofilbereiche durch eine Heizeinrichtung (6) auf die Verschweißungstemperatur aufgeheizt werden, die Heizeinrichtung (6) aus dem Bereich der Gehrungsflächen entfernt wird und die Gehrungsflächen der Rahmenprofile (1) zusammengepresst und verschweißt werden, **dadurch gekennzeichnet, dass** die Dichtungen (2) im Bereich der Gehrungsflächen beim Aufheizen der Gehrungsflächen sowie beim Zusammenfügen der Rahmenprofile (1) jeweils in Längsrichtung des Rahmenprofils (1) mittels eines Schiebers (10) verschoben werden, wobei die Dichtungen (2) jeweils in einem zusammengedrückten Zustand verschoben werden.

2. Verfahren nach Anspruch 1, **dadurch gekennzeichnet, dass** die Dichtungen (2) an der Gehrungsfläche jeweils partiell komprimiert und auf das Rahmenprofil (1) gepresst werden.

3. Verfahren nach Anspruch 1 oder 2, **dadurch gekennzeichnet, dass** die Dichtungen (2) benachbart zu der Gehrungsfläche stärker verschoben werden als in einem weiter von der Gehrungsfläche entfernt liegenden Bereich.

4. Verfahren nach einem der Ansprüche 1 bis 3, **dadurch gekennzeichnet, dass** die Dichtungen (2) im wesentlichen durch eine schräg zur Längsrichtung des Rahmenprofils (1) verlaufenden Schiebefläche (11) verschoben werden.

5. Verfahren nach einem der Ansprüche 1 bis 4, **dadurch gekennzeichnet, dass** die Dichtungen (2) mittels Klemmkräften verschoben werden.

6. Vorrichtung zum Verschweißen von auf Gehrung geschnittenen Rahmenprofilen (1) aus Kunststoff mit eingezogenen Dichtungen (2) aus elastischem Material, insbesondere zur Durchführung des Verfahrens nach einem der vorhergehenden AnSprüche, mit zwei Aufnahmen (7), in denen jeweils ein Rahmenprofil (1) mit mindestens einer Dichtung (2) gehalten ist, und einer Heizeinrichtung (6) zum Aufheizen der Rahmenprofile (1) auf Schweißtemperatur, **dadurch gekennzeichnet, dass** an jeder Aufnahme (7) ein an einer Dichtung (2) angeordneter Schieber (10) vorgesehen ist, der in Längsrichtung des Rahmenprofils (1) bewegbar ist, und die Dichtung (2) auf einer Bodenfläche (18) des Schiebers (10) aufliegt und zumindest an einer Seitenwand (13) des Schiebers (10) anliegt.

7. Vorrichtung nach Anspruch 6, **dadurch gekennzeichnet, dass** die zur Gehrungsfläche gewandte Fläche des Schiebers (10) mit der Gehrungsfläche des Rahmenprofils (1) abschließt.

8. Vorrichtung nach Anspruch 6 oder 7, **dadurch gekennzeichnet, dass** der Schieber (10) zur Gehrungsfläche hin vorgespannt ist.

9. Vorrichtung nach einem der Ansprüche 6 bis 8, **dadurch gekennzeichnet, dass** der Schieber (10) mehrstufig ausgebildet ist, derart, dass eine Schieberstufe benachbart zu der Gehrungsfläche einen längeren Verschiebeweg zurücklegt als eine von der Gehrungsfläche entfernte Schieberstufe.

10. Vorrichtung nach einem der Ansprüche 6 bis 9, **dadurch gekennzeichnet, dass** zwischen dem Schieber (10) und der Aufnahme (7) sich einander gegenüberliegende Führungsprofile ausgebildet sind.

11. Vorrichtung nach einem der Ansprüche 6 bis 10, **dadurch gekennzeichnet, dass** am Schieber (10) benachbart zu der Gehrungsfläche eine Vorderwand (11) vorgesehen ist, die zumindest teilweise an der Stirnfläche der Dichtung (2) anliegt.

## Claims

1. Method of welding mitre-cut frame profiles (1) made of plastic and having incorporated seals made of resilient material which extend over the entire profile length, consist of a fastening foot (21) and at least one sealing lip (23) and whose melting point is higher than that of the material of the frame profile (1), in which method the mitred surfaces and the adjacent frame profile regions are heated to the welding temperature by means of a heating device (6), the heating device (6) is removed from the region of the mitred surfaces, and the mitred surfaces of the frame profiles (1) are pressed together and welded, **characterized in that**, in the region of the mitred surfaces, the seals (2) are each displaced in the longitudinal direction of the frame profile (1) by means of a slide (10) as the mitred surfaces are being heated and as the frame profiles (1) are being joined together, the seals (2) each being displaced in a compressed state.

2. Method according to Claim 1, **characterized in that** the seals (2) are each partially compressed at the mitred surface and pressed onto the frame profile (1).

3. Method according to Claim 1 or 2, **characterized in that** the seals (2) adjacent to the mitred surface are displaced to a greater degree than in a region situated further away from the mitred surface.

4. Method according to one of Claims 1 to 3, **characterized in that** the seals (2) are displaced substantially by means of a sliding surface (11) running obliquely with respect to the longitudinal direction of the frame profile (1).

5. Method according to one of Claims 1 to 4, **characterized in that** the seals (2) are displaced by means of clamping forces.

6. Device for welding mitre-cut frame profiles (1) made of plastic and having incorporated seals (2) made of resilient material, in particular for carrying out the method according to one of the preceding claims, comprising two receptacles (7), in each of which a frame profile (1) together with at least one seal (2) is held, and a heating device (6) for heating the frame profiles (1) to the welding temperature, **characterized in that** a slide (10), which is arranged on a seal (2) and can be moved in the longitudinal direction of the frame profile (1), is provided on each receptacle (7), and the seal (2) lies on a bottom surface (18) of the slide (10) and bears at least against one side wall (13) of the slide (10).

7. Device according to Claim 6, **characterized in that** the surface of the slide (10) that faces the mitred surface terminates with the mitred surface of the frame profile (1).

8. Device according to Claim 6 or 7, **characterized in that** the slide (10) is pretensioned towards the mitred surface.

9. Device according to one of Claims 6 to 8, **characterized in that** the slide (10) is of multistep design, such that a slide step adjacent to the mitred surface travels over a longer displacement distance than a slide step remote from the mitred surface.

10. Device according to one of Claims 6 to 9, **characterized in that** mutually opposite guide profiles are formed between the slide (10) and the receptacle (7).

11. Device according to one of Claims 6 to 10, **characterized in that** a front wall (11) which bears at least partly against the end surface of the seal (2) is provided on the slide (10) adjacent to the mitred surface.

## Revendications

1. Procédé pour souder des profils de cadre (1) découpés en biais dans une matière plastique avec des garnitures en matériau élastique, rentrantes et s'étendant sur la totalité de la longueur du profil, consistant en une bride de fixation (21) et au moins une lèvre d'étanchéité (23), dont le point de fusion se situe au-dessus de celui du matériau du profil de cadre (1), où les surfaces en biais et les zones adjacentes du profil de cadre sont chauffées par un dispositif de chauffage (6) à la température de soudure, le dispositif de chauffage (6) est enlevé de la zone des surfaces en biais et les surfaces en biais du profil de cadre (1) sont pressées ensemble et soudées, **caractérisé en ce que** les garnitures (2) dans le domaine des surfaces en biais sont déplacées chaque fois, lors du chauffage des surfaces en biais et lors de l'assemblage du profil de cadre (1), dans la direction longitudinale du profil de cadre (1) au moyen d'une barre (10), les garnitures (2) étant déplacées chaque fois dans une position où elles sont pressées ensemble.

2. Procédé selon la revendication 1, **caractérisé en ce que** les garnitures (2) sont chacune comprimée sur la surface en biais et pressées contre le profil de cadre (1).

3. Procédé selon la revendication 1 ou 2, **caractérisé en ce que** les garnitures (2) voisines de la surface en biais sont déplacées plus fortement que celles se trouvant éloignées de la surface en biais.

4. Procédé selon l'une quelconque des revendications 1 à 3, **caractérisé en ce que** les garnitures (2) sont déplacées sensiblement selon une surface de déplacement (11) courant obliquement par rapport à la direction longitudinale du profil de cadre (1).

5. Procédé selon l'une quelconque des revendications 1 à 4, **caractérisé en ce que** les garnitures (2) sont déplacées par des forces de serrage.

6. Dispositif pour souder des profils de cadre (1) découpés en biais dans une matière plastique avec des garnitures (2) en matériau élastique, en particulier pour l'exécution du procédé selon l'une quelconque des revendications antérieures, avec deux logements (7), tandis que chaque profil de cadre est maintenu par au moins une garniture (2), et un dispositif de chauffage (6) pour chauffer le profil de cadre (2) à la température de soudure, **caractérisé en ce que** sur chaque logement (7) est prévue une barre (10) disposée sur une garniture (2), qui est mobile dans la direction longitudinale du profil de cadre (1), et que la garniture (2) est déposée sur un encombrement (18) de la barre (10) et est adjacente à au moins une paroi latérale (13) de la barre (10).

7. Dispositif selon la revendication 6, **caractérisé en ce que** la surface de la barre (10) tournée vers la surface en biais est séparée de la surface en biais du profil de cadre (1).

8. Dispositif selon la revendication 6 ou 7, **caractérisé en ce que** la barre (10) est précontrainte en direction de la surface en biais.

9. Dispositif selon l'une quelconque des revendications 6 à 8, **caractérisé en ce que** la barre (10) est configurée avec des étages multiples, de sorte qu'un étage de barre voisin de la surface en biais parcourt une distance de décalage plus importante qu'un étage élolgné de la surface en biais.

10. Dispositif selon l'une quelconque des revendications 6 à 9, **caractérisé en ce que** des profils de guidage sont construits, l'un sur l'autre, entre la barre (10) et le logement (7).

11. Dispositif selon l'une quelconque des revendications 6 à 10, **caractérisé en ce que** sur la barre (10) est prévue une paroi antérieure (11) à proximité de la surface en biais, qui recouvre au moins partiellement la surface frontale de la garniture (2).
